# EUROPEAN PATENT APPLICATION

(11) **EP 2 081 109 A1**
(43) Date of publication of application: **22.07.2009**
(21) Application number: 08150276.7
(22) Date of filing: 15.01.2008
(51) Int. Cl.: G06F 3/048

(54) **Method and apparatus for displaying download information at an electronic device**

(71) Applicant: Research In Motion Limited, Waterloo, Ontario N2L 3W8 (CA)
(72) Inventor: Scriver, Aaron, Kitchener Ontario N2H 3S5 (CA); Hardy, Michael Thomas, Waterloo Ontario N2T 2J8 (CA)
(74) Representative: Rickard, David John

(57) **Abstract**

A method and apparatus for displaying download information at a graphical user interface (GUI) at an electronic device, the electronic device having a display module displaying the GUI, is provided. If a message, in a message list displayed at the GUI, is selected, and the message is associated with at least one active download, then the display module is caused to display information associated with progress of the at least one active download in an area of the GUI which is proximal to the message.

## Description

The specification relates generally to message applications, and specifically to a method and apparatus for displaying download information at an electronic device.

Downloading attached files in e-mail applications has become commonplace with the advent of applications such as Microsoft Outlook. However, tracking progress of attachment downloads can be cumbersome as generally, when the download is initiated, a new dialogue box opens, where the parameters of the download are provided. If a user wishes to continue interacting with the e-mail application (for example to check further e-mails), the new dialogue box is generally relegated to the background, and details of the progress may only be determined by bringing the dialogue box back to the foreground.

The situation is particularly difficult for e-mail applications on mobile electronic devices, in which an entirely new download screen is provided to track the download. In general, it is either not possible to leave the download screen without interrupting (or even cancelling) the download. Indeed, it is often not possible to check other e-mails until downloading the attachment is complete.

While there are some solutions that attempt to make tracking progress of attachment downloading more convenient, they are generally not suitable for all e-mail applications, and are further unsuitable for mobile electronic devices. For example, in the above mentioned dialogue box solution, the dialogue box may have an associated taskbar button in a taskbar that shows progress of the download. However, it is unclear from the taskbar button, with which e-mail the attachment is associated, leading to confusion especially if with multiple active downloads. The use of taskbar buttons in mobile electronic devices is not desirable, as the screen size is generally too small for them to be legible to the average user. Indeed, any of these solutions lead to increased interaction with the electronic device and increased use of system resources.

### GENERAL

A first broad aspect of an embodiment seeks to provide a method of displaying download information at a graphical user interface (GUI) at an electronic device, the electronic device having a display module displaying the GUI. The method may comprise determining that a message, in a message list displayed at the GUI, is selected. The method may further comprise determining if the message is associated with at least one active download; and if the message is associated with the at least one active download, causing the display module to display information associated with progress of the at least one active download in an area of the GUI which is proximal to the message.

In some embodiments of the first broad aspect, determining that the message, in the message list displayed at the GUI, is selected may comprise at least one of determining that a cursor is hovering over a message field associated with the message, receiving input from an input device indicative that the cursor has been used to click on a message field associated with the message, and determining that a message field associated with the message has been highlighted. In some of these embodiments, determining that the message, in the message list displayed at the GUI, is selected further comprises polling a field manager.

In other embodiments of the first broad aspect, determining if the message is associated with an active download may comprise polling a download manager.

In further embodiments of the first broad aspect, the method may further comprise receiving the information associated with progress of the at least one active download.

In yet further embodiments of the first broad aspect, causing the display module to display information associated with progress of the at last one active download in an area of the GUI which is proximal to the message may comprise causing the display module to display a tooltip comprising the information. In some of these embodiments, the method may further comprise updating the information associated with progress of the at least one active download, and in response updating the tooltip. In some of these embodiments, the method may further comprise registering the tooltip with a download manager and wherein the updating the tooltip comprises transmitting the information from the download manager to the tooltip.

In some embodiments of the first broad aspect, the method may further comprise causing the display module to display an active download icon proximal to the message, while the at least one active download is occurring.

In other embodiments of the first broad aspect, the method may further comprise initiating the active download.

In further embodiments of the first broad aspect, the method may further comprise determining that a previously selected message, in a message list displayed at the GUI, is no longer selected; and if the display module is displaying information associated with progress of the at least one active download associated with the previously selected message, causing the display module to cease displaying the information.

A second broad aspect of an embodiment seeks to provide an electronic device for displaying download information at a graphical user interface (GUI), the GUI displayed at a display module in communication with the electronic device. The electronic device may comprise an interface for receiving a message. The electronic device may further comprise a memory comprising at least one application enabled for: causing the message to be displayed in a message list displayed at the GUI; initiating at least one active download of at least one attachment associated with the message; determining that the message, in the message list displayed at the GUI, is selected; determining if the message is associated with the at least one active download; and if the message is associated with the at least one active download, causing the display module to display information associated with progress of the at least one active download in an area of the GUI which is proximal to the message. The electronic device may further comprise a processing unit enabled for processing the at least one application.

In some embodiments of the second broad aspect, the electronic device may further comprise the display module and an input module for receiving an input for selecting the message. In some of these embodiments, the electronic device may comprise a handheld electronic device.

In other embodiments of the second broad aspect, determining that the message, in the message list displayed at the GUI, is selected may comprise at least one of determining that a cursor is hovering over a message field associated with the message, receiving input from the input device indicative that the cursor has been used to click on a message field associated with the message, and determining that a message field associated with the message has been highlighted.

In further embodiments of the second broad aspect, the at least one application may comprise at least one of a messaging application, a tooltip polling thread, a field manager and a download manager.

In yet further embodiments of the second broad aspect, causing the display module to display information associated with progress of the at last one active download in an area of the GUI which is proximal to the message may comprise causing the display module to display a tooltip comprising the information. In some of these embodiments, the at least one application may be further enabled for updating the information associated with progress of the at least one active download by updating the tooltip. In some of these embodiments, the at least one application may be further enabled for causing the display module to display an active download icon proximal to the message, while the at least one active download is occurring.

In some embodiments of the second broad aspect, the at least one application may be further enabled for determining that a previously selected message, in a message list displayed at the GUI, is no longer selected; and if the display module is displaying information associated with progress of the at least one active download associated with the previously selected message, causing the display module to cease displaying the information.

### BRIEF DESCRIPTIONS OF THE DRAWINGS

Embodiments are described with reference to the following figures, in which:

Fig. 1 depicts a system for displaying download information in a graphical user interface (GUI), according to a non-limiting embodiment;

Fig. 2 depicts a GUI for displaying download information, according to a non-limiting embodiment;

Figs. 3 through 8 depict a GUI of a message associated with at least one attachment, according to a non-limiting embodiment;

Fig. 9 depicts a GUI for displaying download information, according to a non-limiting embodiment;

Fig. 10 depicts a method of displaying download information at a GUI, according to a non-limiting embodiment; and

Figure 11 depicts a signal diagram for providing a tooltip at a GUI, according to a non-limiting embodiment.

### DESCRIPTION OF PREFERRED EMBODIMENTS

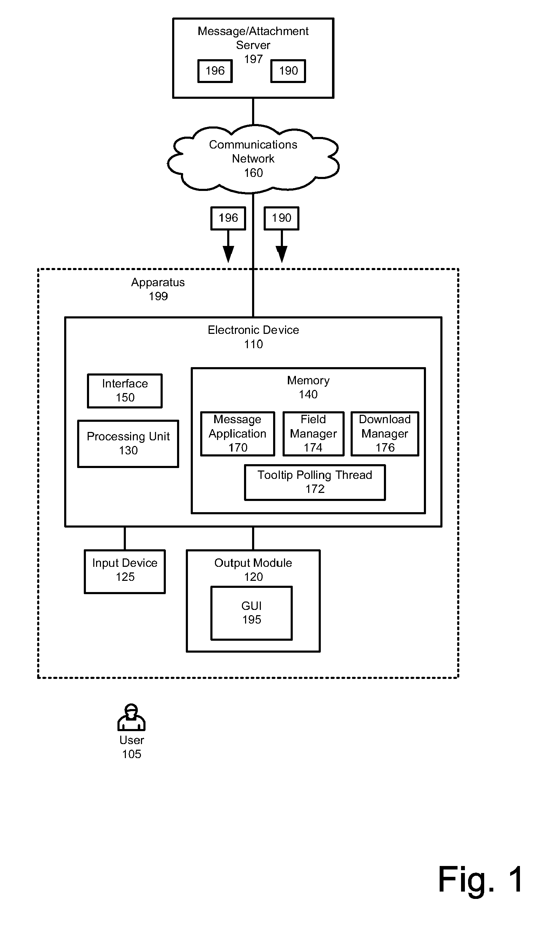

Figure 1 depicts a system for displaying download information in a graphical user interface (GUI), according to a non-limiting embodiment. An electronic device 110 associated with a user 105, is in communication with an output module 120 and an input device 125, the electronic device 110 comprising a processing unit 130 for processing data, the processing unit 130 coupled to a memory 140 and an interface 150 for enabling the electronic device 110 to communicate with a communications network 160. The memory 140 stores data for processing by the processing unit 130, including a messaging application 170, such as an application for processing messages 190 (generically a message 190, and collectively messages 190), such as e-mail, received from the communications network 160.

The messaging application 170 may initiate upon start-up of the electronic device 110, or the user 105 may cause the processing unit 130 to process the messaging application 170 by interfacing with the electronic device 110 via the input device 125. In any event, once the messaging application 170 is initiated, the user 105 may interact with the messaging application 170 via a graphical user interface (GUI) 195 associated with the messaging application 170, displayed on the output module 120. Details of the GUI 195 are described below, however, the GUI 195 generally displays a list of messages which have been received, in a message list, and enables the user 105 to view messages by selecting a message and opening a message viewing screen in the GUI 195. In some embodiments, the message 190 may be associated with at least one attachment 196 (generically an attachment 196, and collectively attachments 196), which was not immediately received with the message, for example to save bandwidth. The attachment 196 may be stored at a message/attachment server 197 until download of the attachment 196 is requested by the electronic device 110 (e.g. when triggered by the user 105 via the GUI 195, and discussed below). In other embodiments, the message/attachment server 197 may receive the message 190 (and the attachment 196) prior and further manage transmitting the message 190 to the electronic device 110. In some embodiments a copy of the message 190 may also be stored at the message/attachment server 197.

The memory 140 may also store a tooltip polling manager 172 for managing tooltips, a field manager 174 for managing fields displayed at the GUI 195, and a download manager 176 for managing download of attachments 196. The processing unit 130 may processes the tooltip polling manager 172, the field manager 174, and the download manager 176 to display download information in the GUI 195, as described below.

The output module 120 comprises any display device for displaying data to the user 105, and specifically the GUI 195, such as a cathode ray tube (CRT), a flat panel display such as an LCD or a plasma display, and the like. The input device 125 comprises any device for receiving data from the user 105. The input device 125 may comprise a manual interface device, such as a keyboard and/or a pointing device, a voice interface device, or a combination thereof. Other types of input devices may occur to one of skill in the art. However, embodiments are not to be considered particularly limited by the output module 120 or the input device 125.

In some embodiments, the electronic device 110 comprises a personal computer, the input device 125 comprises a keyboard, and the output module 120 comprises a computer screen (e.g. CRT or flat panel display) coupled to the personal computer. In other embodiments, the electronic device 110, the output module 120 and the input device 125 may be elements of an apparatus 199. In some of these embodiments, the apparatus 199 may comprise a mobile electronic device operable to communicate with the communications network 160 via the interface 150. In these embodiments, the apparatus 199 may comprise a laptop computer, cell phone, a personal digital assistant (PDA), a WiFi-based communications device, a WiMax based communications device, a combination thereof, or any other mobile electronics device which allows the user 105 to view messages, such as e-mail.

In some embodiments, the mobile electronic device may be enabled to communicate via a wireless network, while in other embodiments, the mobile electronic device may be enabled to communicate via a wired network. In yet other embodiments, the mobile electronic device may be enabled to communicate via either a wireless or a wired network. In some embodiments the mobile electronic device is enabled to communicate with the communications network 160, via another computing device local to the mobile electronic device, which is in communication with the communications network 160. In these embodiments, the mobile electronic device may be enabled to communicate with the computing device local to the mobile device via a wired or a wireless link (e.g. WiFi, Bluetooth, and/or a hardwired serial bypass, such as a USB link).

In some embodiments the communications network 160 may comprise at least one of a wired network, a wireless network, a local area network (LAN), a wide area network (WAN), a, a packet-based communications network, such as the internet, the PSTN, a cell network, a WiFi network, a WiMax network, or a combination thereof.

The interface 150 enables the electronic device 110 to communicate via the communication network 160, including receiving the message 190 and further receiving at least one attachment 196 associated with the message 190, as will be described below. In embodiments where the communications network 160 comprises a wireless network, the interface 150 comprises a wireless communications interface, as known to one of skill in the art. Non-limiting examples of a wireless communications interface include, but are not limited to, a cell phone interface (e.g. CDMA, GSM, 1x, EVDO, UTMS, and the like), a WiFi interface, a WiMax interface, and the like. In embodiments where the communications network 160 comprises a wired communications network, the interface 150 comprises a wired communications interface, as known to one of skill in the art. In some of these embodiments, the interface 150 is enabled to connect to an edge device (not depicted) of the communications network 160, for example a modem. In some of these embodiments, the interface 150 may be enabled to connect to the edge device via another computing device, which is in communication with the communications network 160, as described above. In yet other embodiments the interface 150 may be enabled for communications via either a wired or a wireless communications network.

Embodiments are not to be considered particularly limiting by the electronic device 110, whether integrated into the apparatus 199 or not, the interface 150 or the communications network 160, however, and other electronic devices, interfaces and communications networks may occur to one of skill in the art.

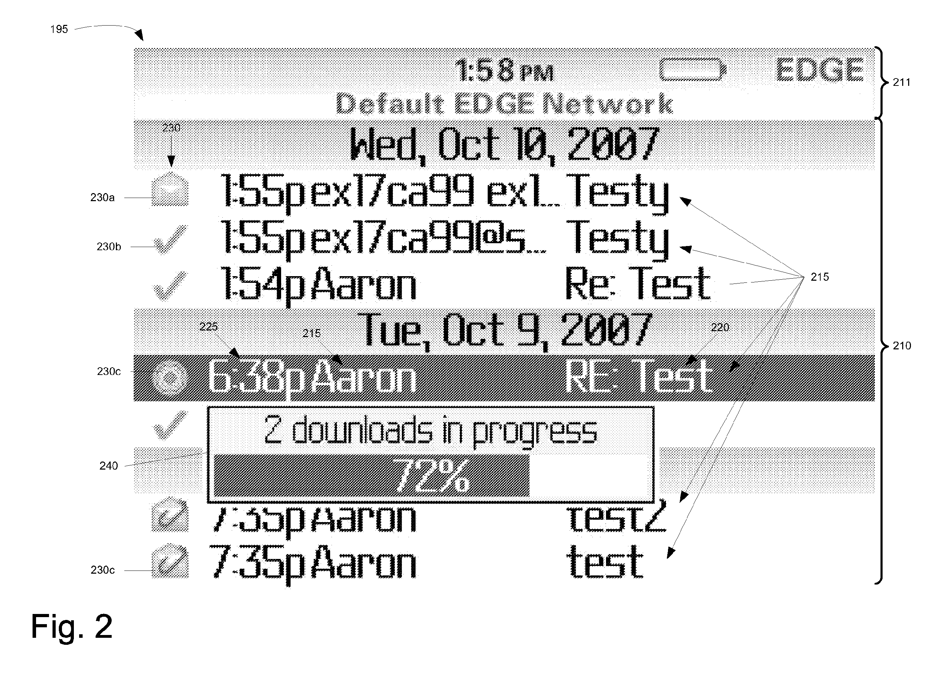

Attention is now directed to Figure 2, which depicts a non-limiting embodiment of the GUI 195 displayed at the output module 120. A message list 210 is displayed at the GUI 195, the message list 210 comprising a list of message fields 215 (generically a message field 215, and collectively message field 215), each representing a message 190 that have been received at the electronic device 110. The message fields 215 in the message list 210 may be sorted by date (as depicted), however the messages may be sorted in any manner desired (e.g. by sender, by size, with attachments and without, etc.), and displayed in any convenient manner (e.g. in columns or blocks, rather than lines, etc.). In general, the field manager 174 manages the message fields 215. An optional header 211 of the GUI 195 may display further information of interest to the user 105, such as the time, a name or type of the communications network 160 (e.g. "Default EDGE Network" and EDGE, respectively), and battery strength, however the header 211 is not be considered particularly limiting.

Each message field 215 comprises information which assists the user 105 in understanding the context and/or content of the message 190 with which it is associated. For example, in the depicted embodiment, each message field 215 comprises a sender identifier 215 identifying the sender of the message, a subject identifier 220 identifying the subject of the message, and a time identifier 225 identifying the time that the message was received (or alternatively was sent). The sender identifier 215 may comprise either a name of the sender or an address of the sender (e.g. the originating e-mail address). While only one line in the message list 210 is labelled

In some embodiments, each message field 215 may further comprise an identifier 230 which is further indicative of the context and/or content of the message 190 with which it is associated, for example identifiers 230a, 230b, 230c and 230d (collectively identifiers 230 and generically an identifier 230). For example, the identifier 230a identifies its associated message has having been opened, the identifier 230b identifies its associated message as having been responded to, and the identifier 230c identifies its associated message as having an associated attachment (as well having been opened). In some embodiments, the identifier 230 may identify its associated message as a message which has not yet been opened (not depicted).

Some non-limiting embodiments comprise the identifier 230d, which identifies its associated message as being associated with an active download, as will be described below. In the depicted embodiment, each identifier 230 comprises an icon indicative of the context and/or content of the message with which it is associated (e.g. a closed envelope, an open envelope, a checkmark, a paperclip on an envelope, an icon associated with active downloads etc.).

As will also be described below, in some embodiments the GUI 195 further comprises a download indicator 240 for displaying progress of an active download for the associated message.

In practise, the user 105 will receive the message 190, such as an e-mail, and a new message field 215 will appear in the message list 210 at the GUI 195, represented by the sender identifier 215 and/or the subject identifier 220 and/or the time identifier 225 and/or the identifier 230. The user 105 may open the message 190 by selecting the message field 215 using the input device 125, for example, by scrolling through the message list 210 to highlight a given message field 215, or by using a cursor to select a given message field 215, either by hovering over a message field 215 or clicking on a message field 215. In general, once the message 190 is open, the user 105 will then be provided with an option of initiating download of any attachments (e.g. attachment 196), as known to one of skill in the art.

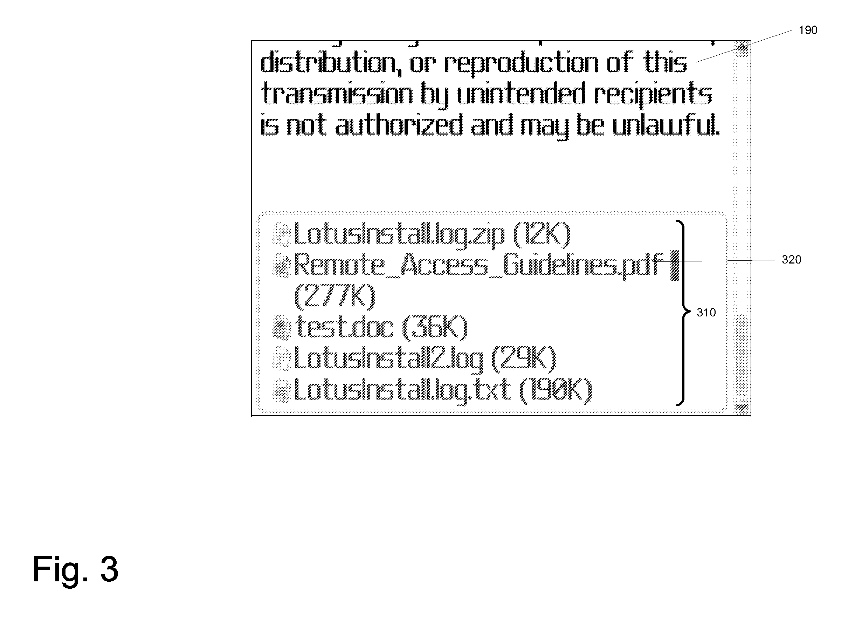

A particular non-limiting example of initiating download of attachments is now provided, however a person of skill in the art would understand that there are many methods of initiating download of attachments which are within the scope of present embodiments. Hence, in the example, once the message 190 is opened, the GUI 195 will display the contents of the message 190, for example the text of an e-mail etc. Figure 3 depicts a non-limiting embodiment of the message 190 displayed at the GUI 195 (i.e. at the output module 120), where the message 190 is associated with at least one attachment 196, and the at least one attachment 196 has not been received at the electronic device 110. In these embodiments, the message 190 comprises an associated attachment list 310, comprising a listing of attachments 196 which are available for download, for example from the attachment server 197, including but not limited to a name of each attachment 196 and, in some embodiments, the size of each attachment 196. The user 105 may then select a given attachment 320 from the associated attachment list 310 using the input device 125, similar to selecting a message 190 from the message list 210, described above.

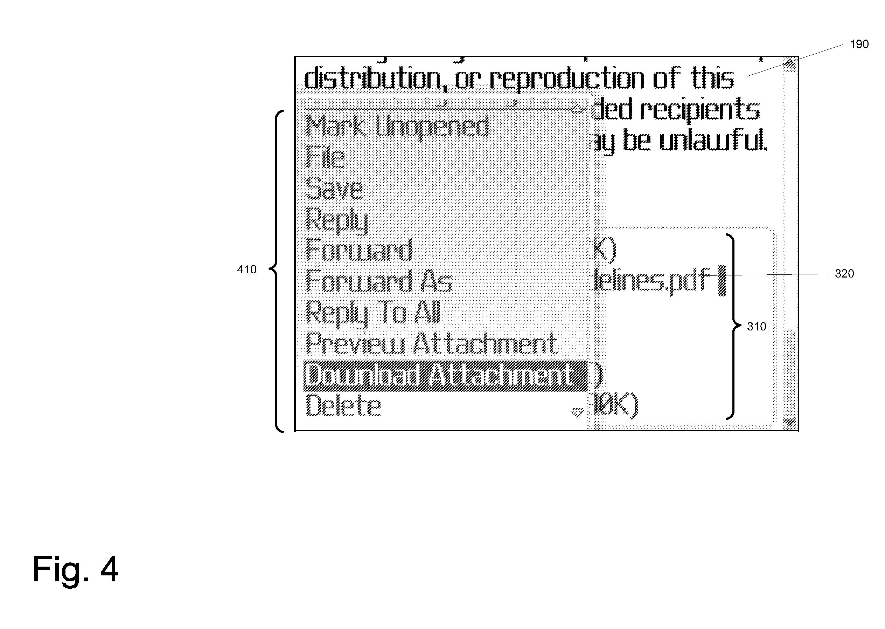

As depicted in Figure 4, in a particular non-limiting embodiment, detection of the selection of the given attachment 320 (e.g. by processing the input from the input device 125) causes the processing unit 130 to provide the user 105, at the output module 120, with a list of options 410 that may be executed with regard to the message 190, including but not limited to initiating download of the of the given attachment 320. The user 105 may select on option from the list of options 105 using the input device 125, similar to selecting a message 190 from the message list 210, described above. In the depicted embodiment, the user 105 has selected the option "Download Attachment".

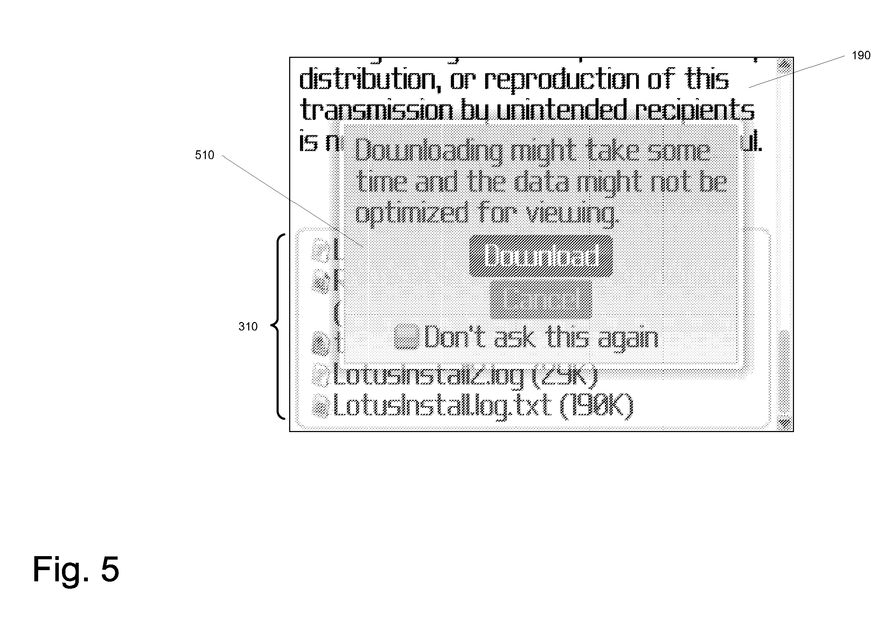

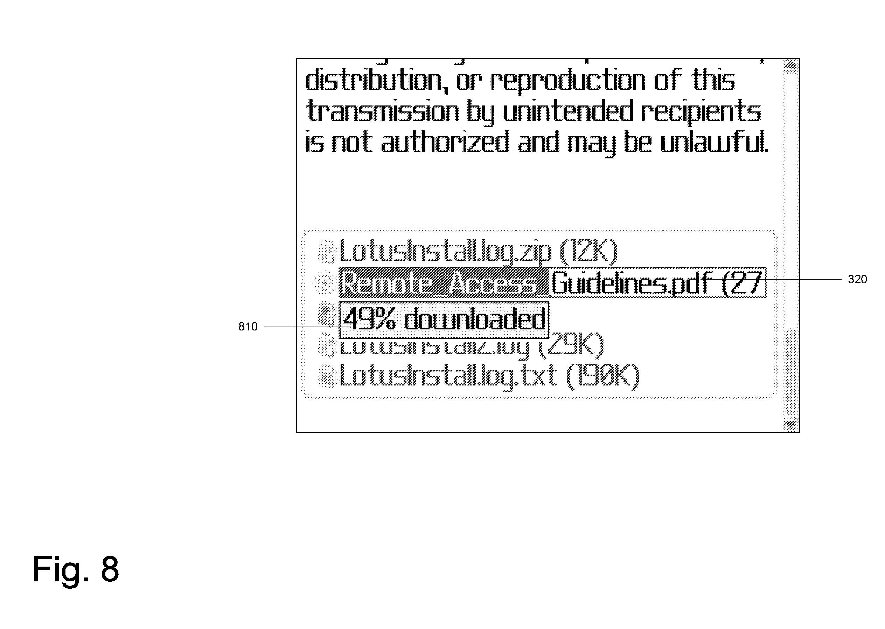

In some embodiments, selecting the option "Download Attachment" initiates the downloading of the given attachment 320 (described below, with reference to Figure 8), however, in other embodiments, one or more intermediate steps may occur. For example, as depicted in Figure 5, the processing unit 130 may cause a warning 510 to be presented to the user 105 at the output module 120, the warning 510 notifying the user 105 that downloading may take some time and/or the data in the given attachment 320 may not be optimized for viewing at the electronic device 110. In these embodiments, the user 105 may be given the option of proceeding (i.e. choosing "Download") or cancelling ("Cancel").

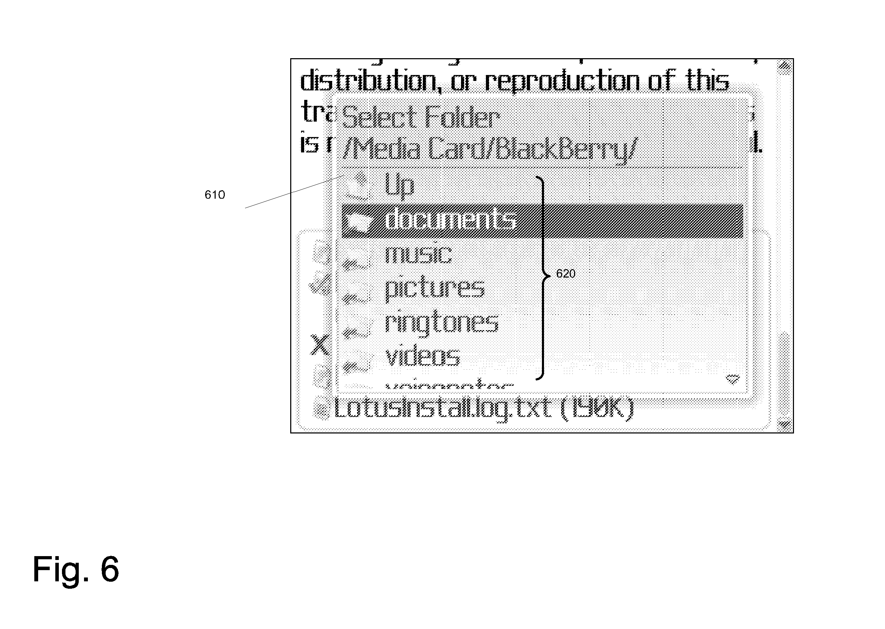

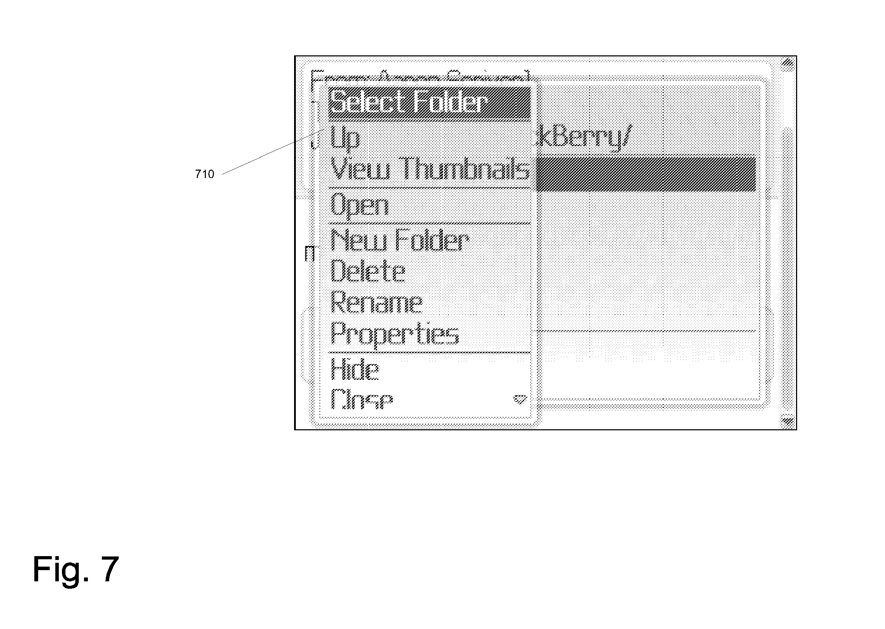

Presuming the user 150 chooses to proceed, in some embodiments the downloading of the given attachment 320 may then initiate. In other embodiments, as depicted in Figure 6, the processing unit 130 may cause a query 610 to be presented to the user 105 at the output module 120, the query 610 enabling the user 105 to select a folder from a list of folders 620 where the given attachment 320 is to be saved (for example "documents", as depicted). The selected folder may be located in the memory 140, or another memory associated with the electronic device 110. In some embodiments, as depicted in Figure 7, selecting a folder from the list of folders 620 (i.e. via the input device125), causes the processing unit 130 to present a list of further options 710 from which the user may choose which may include a confirmation the selected folded ("Select Folder").

In these embodiments, once the user 105 has confirmed that the selected folder has been selected, the downloading of the given attachment 320 is initiated.

In any event, in what ever manner the user 105 initiates the download of the given attachment 320, the download manager 176 then generally manages the download of the given attachment 320 including, but limited to, saving the given attachment 320 to the selected folder (or alternatively to a default folder), and tracking progress of the download, for example tracking the number of bytes of the given attachment 320 that have been downloaded, and/or the percentage of the given attachment 320 that has been downloaded. The download manager 176 may further have access to the size of the given attachment 320 to calculate the percentage that has been downloaded.. Once the download has initiated, the processing unit 130 may then cause the output module 120 to display information associated with progress of the active download.

As depicted in Figure 8, in some of these embodiments, the information associated with progress of the active download may be displayed in an area of the GUI 195 which is proximal to the listing of the given attachment 320, for example via an icon 810, the icon 810 comprising a field for displaying the information, and the icon 810 in communication with the download manager 176 to receive download progress updates for display at the icon 810. For example, when the download initiates, the icon 810 may read "0% downloaded", and the percentage may updated periodically as the download progresses. For example, in the embodiment depicted in Figure 8, the icon 810 reads "49% downloaded".

Further, the user 105 may initiate any number of downloads of attachments 196, and the download manager 176 may manage each active download, as well as track the progress of each active download.

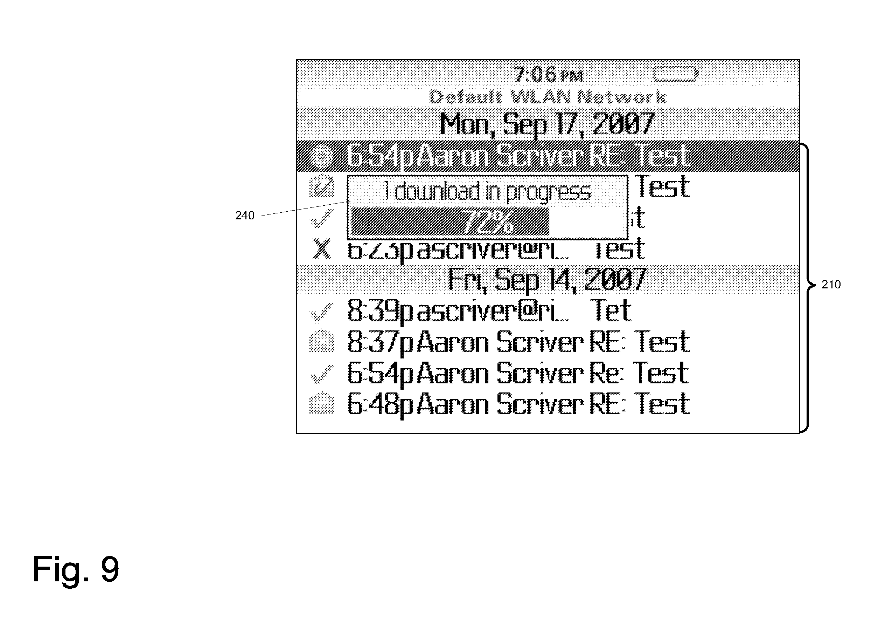

In any event, with at least one attachment 196 being downloaded (i.e. at least one active download), the user 105 may then return to the message list 210 by interacting with the input device 125, the processing unit 130 processing data entered into the input device 125, and in turn causing the output module 120 to display the message list 210 at the GUI 195, as depicted in both Figures 2 and 9.

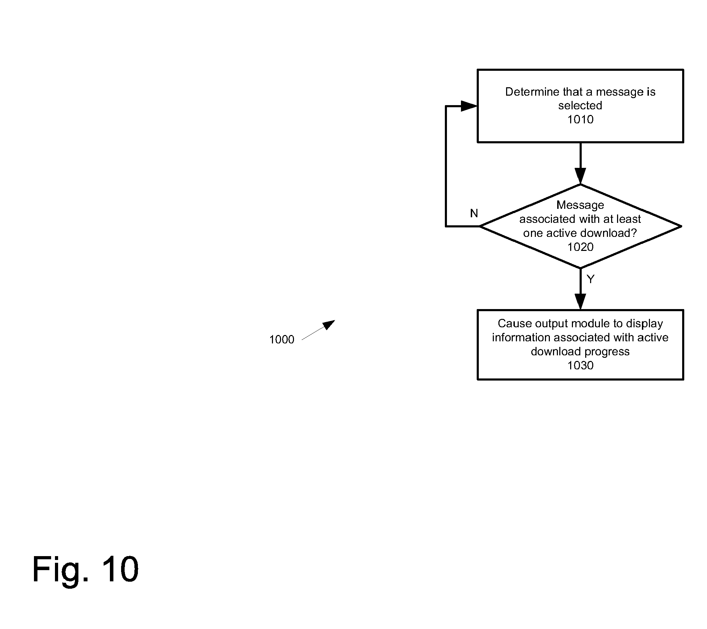

Attention is now directed to Figure 10, which depicts a method 1000 of displaying download information at GUI 195. The method 1000 may be executed by the processing unit 120, by processing program code stored in the memory 140, or another memory associated with the electronic device 110. In some embodiments, the method 1000 may be incorporated into the message application 170, and the method 1000 may be executed by the processing unit 130 as the processing unit 130 processes the message application 170. In other embodiments, aspects of the method 1000 may be executed by the processing unit 130 as the processing unit processes the message application 170, tooltip polling thread 172, the field manager 174, and/or the download manager 176.

In order for the user 105 to track progress of at least one active download, the user 105 selects a message 190, by selecting a message field 215, using the input device 125, for example, by scrolling through the message list 210 to highlight a given message field 215, or by using a cursor to select a given message field 215, either by hovering over a message field 215 or clicking on a message field 215. At step 1010, the processing unit determines that a message 190 is selected. Once a message 190 is selected, the processing unit 130, at step 1020, determines if there are any active downloads associated with the selected message 190. If not, the processing unit 130 waits until another message 190 is selected, and again proceeds to step 1010.

However, if the selected message 190 is associated with at least one active download, at step 1030 the processing unit 130 causes the output module 120 to display information associated with progress of the at least one active download, for example within the download indicator 240. Further, the information associated with progress of the at least one active download may be displayed in an area of the GUI 195 which is proximal to the selected message 190 (i.e. the selected message field 215). In general, the information is displayed in a manner such that the user 105 understands that the information is associated with the selected message 190. The processing unit 130 may hence be enabled to determine an optimal position of the information displayed, for example, above, below or beside the selected message 190 (i.e. the message field 215), such that there is enough area of the GUI 195 to display the information and that the information is legible. The processing unit 130 may be enabled to determine an optimal position of the information displayed by processing the position of the selected message 190, and area of the GUI 195occupied by the selected message 190, to determine where to place the information displayed. For example, the information may require a certain amount of the area of the GUI 195 to legibly display the information (and the determination of the certain amount of the area may be based on a default minimum font size stored within the memory 140). Hence, if the selected message 190 is proximal an edge of the GUI 195, there may not be enough room available to display the information between the selected message 190 and the edge of the GUI 195, without obscuring the selected message 190. Hence the processing unit 130 is enabled to determine where to display the information based on the area available within the GUI 195 not occupied by the selected message 190, and the area required to display the information, such that the selected message 190 is not obscured. If there is no optimal position (e.g. the selected message 190 occupies a substantial portion of the GUI 195, such that the selected message 190 will be obscured in some way not matter where the information is displayed), the processing unit 130 determines the position of the information within the GUI 195 based on where the selected message 190 will be the least obscured.

Further, as the download progresses, the information is updated to reflect the progress of the download. For example, in one non-limiting embodiment, the download indicator 240 may be in communication with the download manager 176, such that the download indicator 240 may receive updates of the progress of the download. Such updates may be received periodically, or may be received whenever progress occurs. Further the information displayed at the download indicator 240 may be updated periodically, whenever an updated is received and/or whenever significant progress occurs. In the latter embodiments, significant progress may be defined as progress exceeding a threshold. For example, an update to the information displayed at the download indicator 240 only if greater than an additional X% of the attachment is received, such as an additional 1%, 5%, 10% etc. Hence the user 105 will view the progress as occurring in 1%, 5% or 10% steps, respectively.

In some embodiments, the information displayed reflects the number of active downloads associated with the selected message. For example Figure 9 depicts an embodiment where there is a single active download associated with a selected message 190, the download indicator 240 indicating "1 download in progress", along with the progress of the active download. Figure 2 depicts an embodiment where there are two active download associated with a selected message 190, the download indicator 240 indicating "2 downloads in progress", along with the progress of both active downloads. In some of these embodiments, information displayed at the download indicator 240 may comprise the total progress of all the active downloads (as depicted), or display the progress of each active download (e.g. the download indicator 240 may indicate: "2 downloads in progress; download 1: 48%, download 2: 63%").

The format of the information displayed at the download indictor 240 is not particularly limiting, however.

In some embodiments, whenever there is an active download associated with a message 215, the processing unit 130 may further cause the output module 120 to update the identifier 230 to reflect that at least one active download is associated with a message 215, regardless of whether a message 190 is selected or not. In this manner, the user 105 will understand that an active download is occurring, and that the progress of the active download may be tracked by selecting the message 190.

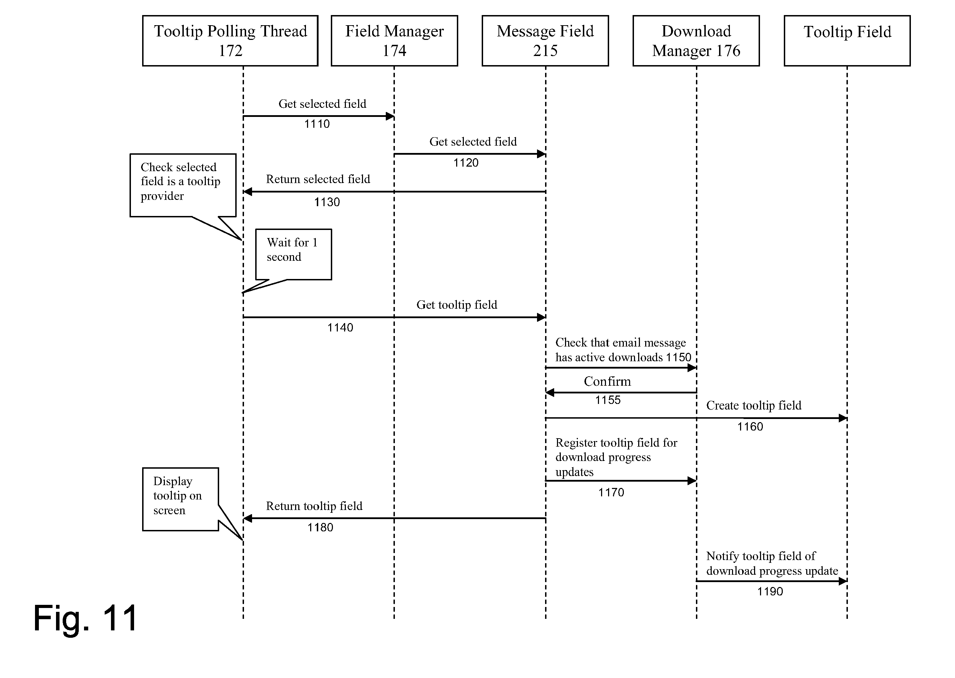

In a particular non-limiting embodiment, the download indicator 240 comprises a tooltip. A person of skill in the art would understand a tooltip to be a small window that appears when a cursor is held over a displayed element, such as a message field 215. Within these embodiments, the processing unit 130 may process the tooltip polling thread 172, along with the field manager 174 and the download manager 176, to display and manage the download indicator 240 (i.e. tooltips). Figure 11 depicts a signal diagram of a non-limiting embodiment for providing a tooltip at the GUI 195.

At step 1110, the tooltip polling thread 172 determines if a message field 215 has been selected (i.e. if a message 190 has been selected), by transmitting a signal to the field manager 174. The field manager 174 determines which message field 215 is selected and queries the selected message field 215, at step 1120, to trigger the selected message field 215 to provide an identifier of the selected message field 215 to the tooltip polling thread 172 at step 1130. In these embodiments, a message field 215 may further comprise a logical entity which is enabled to communicate with other logical entities, such as the tooltip polling thread 172, the field manager 174 and the download manager 176, and further provide tooltips. The tooltip polling thread 172 then determines if the selected message field 215 is a tooltip provider. In general, a given message field may be designated as a tooltip provider at the time the field is defined, and hence the tooltip polling thread 172 determines if the selected message field 215 is a tooltip provider, based on the type of field. For example, an email message field may be generally designated a tooltip provider, whereas a phone log entry field is generally not. Hence, if the selected message field 215 is not a tooltip provider, further signalling does not occur. However, in embodiments where the selected message field 215 is a tooltip provider, In some embodiments, the tooltip polling thread 172 may then delay for a period of time (for example 1 second), before triggering the selected message field 215 to get a tooltip field, at step 1140. The delay may be introduced to ensure that the selected message field 215 remains selected (this may be checked by further querying the field manager 174, not depicted). The delay allows the user 105 to navigate the message fields 215 without constant interruption by tooltips, as described below. The delay means that the user has to pause on a message field 215 for a tooltip to display, as described below. At step 1150, the selected message field 1150 determines if the associated message 190 is associated with at least one active download by querying the download manager 176.

If there are no active downloads, the download manager 176 may inform the selected field 215 of such and no further signalling occurs. However, if there is at least one active download, the download manager 176 confirms that there are active downloads at step 1155. In response, the selected message field 215 creates a tooltip field having an identifier at step 1160, and further registers the tooltip field for download progress updates by transmitting a signal comprising the tooltip field identifier, to the download manager 176, at step 1170, as well as returning the tooltip field identifier to the tooltip manager 1172. The tooltip manager 172 subsequently displays a tooltip (i.e. the download indicator 240) comprising the tooltip field in an area of the GUI 195 which is proximal to the message 190 (i.e. the message field 215), as described above. At step 1190, the download manager 176 notifies the tooltip field of download progress updates, which are subsequently displayed within the tooltip field.

While the download indicator 240 has been described with reference to tooltips, other methods of causing the output module 120 to display information associated with progress of active downloads in an area of the GUI 190 which is proximal to said message are within the scope of the present invention.

Further, more than one message may be associated with at least one active download. For example, the user 105 may initiate downloads associated with several different messages 190, and the user 105 may track progress of downloads associated with each message 190 by selecting each message 190 in turn.

Those skilled in the art will appreciate that in some embodiments, the functionality of the message application 170, the tooltip polling thread 172, the field manager 174, and the download manager 176 may be implemented using pre-programmed hardware or firmware elements (e.g., application specific integrated circuits (ASICs), electrically erasable programmable read-only memories (EEPROMs), etc.), or other related components. In other embodiments, the functionality of the message application 170, the tooltip polling thread 172, the field manager 174, and the download manager 176 may be achieved using a computing apparatus that has access to a code memory (not shown) which stores computer-readable program code for operation of the computing apparatus. The computer-readable program code could be stored on a medium which is fixed, tangible and readable directly by these components, (e.g., removable diskette, CD-ROM, ROM, fixed disk, USB drive), or the computer-readable program code could be stored remotely but transmittable to these components via a modem or other interface device connected to a network (including, without limitation, the Internet) over a transmission medium. The transmission medium may be either a non-wireless medium (e.g., optical or analog communications lines) or a wireless medium (e.g., microwave, infrared, free-space optical or other transmission schemes) or a combination thereof.

A portion of the disclosure of this patent document contains material which is subject to copyright protection. The copyright owner has no objection to the facsimile reproduction by any one the patent document or patent disclosure, as it appears in the Patent and Trademark Office patent file or records, but otherwise reserves all copyrights whatsoever.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method of displaying download information at a graphical user interface 'GUI' at an electronic device, the electronic device having a display module displaying the GUI, comprising,
determining that a message, in a message list displayed at the GUI, is selected;
determining if said message is associated with at least one active download; and
if said message is associated with said at least one active download, causing the display module to display information associated with progress of said at least one active download in an area of the GUI which is proximal to said message.

2. The method of claim 1, wherein said determining that said message, in said message list displayed at the GUI, is selected comprises at least one of determining that a cursor is hovering over a message field associated with said message, receiving input from an input device indicative that said cursor has been used to click on a message field associated with said message, and determining that a message field associated with said message has been highlighted.

3. The method of claim 2, wherein said determining that said message, in said message list displayed at the GUI, is selected further comprises polling a field manager.

4. The method of any one of the preceding claims, wherein said determining if said message is associated with an active download comprises polling a download manager.

5. The method of any one of the preceding claims, further comprising receiving said information associated with progress of said at least one active download.

6. The method of any one of the preceding claims, wherein said causing the display module to display information associated with progress of said at last one active download in an area of the GUI which is proximal to said message comprises causing the display module to display a tooltip comprising said information.

7. The method of claim 6, further comprising updating said information associated with progress of said at least one active download, and in response updating said tooltip.

8. The method of claim 7, further comprising registering said tooltip with a download manager, wherein said updating said tooltip comprises transmitting said information from said download manager to said tooltip.

9. The method of any one of the preceding claims, further comprising causing the display module to display an active download icon proximal to said message, while said at least one active download is occurring.

10. The method of any one of the preceding claims, further comprising initiating said active download.

11. The method of any one of the preceding claims, further comprising determining that a previously selected message, in a message list displayed at the GUI, is no longer selected; and if the display module is displaying information associated with progress of said at least one active download associated with said previously selected message, causing the display module to cease displaying said information.

12. An electronic device for displaying download information at a graphical user interface 'GUI', the GUI displayed at a display module in communication with the electronic device, comprising,
an interface for receiving a message; and
a memory comprising at least one application enabled for:
causing said electronic device to perform the steps of the method of any one of claims 1 to 11; and
a processing unit enabled for processing said at least one application.

13. The electronic device of claim 12, further comprising the display module and an input module for receiving an input for selecting said message.

14. The electronic device of claim 12 or claim 13, wherein said electronic device comprises a handheld electronic device.

15. The electronic device of any one of claims 12 to 14, wherein said at least one application comprises at least one of a messaging application, a tooltip polling thread, a field manager and a download manager.

16. A computer readable medium storing computer readable instructions executable by a processor of a computing device to cause said device to implement the steps of the method of any one of claims 1 to 11.

## Amended claims

### Amended claims in accordance with Rule 137(2) EPC.

**1.** A method of displaying download information at a graphical user interface (GUI) (195) at an electronic device (110), the electronic device (110) having a display module (120) displaying the GUI (195), comprising,
determining (1010) that a message (190), in a message list (210) displayed at the GUI (195), is selected;
once said message (190) is selected, determining (1020) if said message (190) is associated with at least one active download; and
if said message (190) is associated with said at least one active download, causing (1030) the display module (120) to display information (240) associated with progress of said at least one active download in an area of the GUI (195) which is proximal to said message.

**2.** The method of claim 1, wherein said determining that said message (190), in said message list (210) displayed at the GUI (195), is selected comprises at least one of determining that a cursor is hovering over a message field (215) associated with said message (190), receiving input from an input device (125) indicative that said cursor has been used to click on a message field (215) associated with said message (190), and determining that a message field (215) associated with said message (190) has been highlighted.

**3.** The method of claim 2, wherein said determining that said message (190), in said message list (210) displayed at the GUI (195), is selected further comprises polling a field manager.

**4.** The method of claim 1, wherein said determining if said message (190) is associated with an active download comprises polling a download manager (176).

**5.** The method of claim 1, further comprising receiving said information (240) associated with progress of said at least one active download.

**6.** The method of claim 1, wherein said causing the display module (120) to display information (240) associated with progress of said at last one active download in an area of the GUI (195) which is proximal to said message (190) comprises causing the display module (120) to display a tooltip comprising said information (240).

**7.** The method of claim 6, further comprising updating said information (240) associated with progress of said at least one active download, and in response updating said tooltip.

**8.** The method of claim 7, further comprising registering said tooltip with a download manager (176), wherein said updating said tooltip comprises transmitting said information (240) from said download manager (176) to said tooltip.

**9.** The method of claim 1, further comprising causing the display module (120) to display an active download icon (230c) proximal to said message (190), while said at least one active download is occurring.

**10.** The method of claim 1, further comprising initiating said active download by selection of a download attachment option in an option list (410).

**11.** The method of claim 1, further comprising determining that a previously selected message (190), in a message list (210) displayed at the GUI (195), is no longer selected; and if the display module (120) is displaying information (240) associated with progress of said at least one active download associated with said previously selected message (190), causing the display module (120) to cease displaying said information (240).

**12.** An electronic device (110) for displaying download information at a graphical user interface (GUI) (195), the GUI (195) displayed at a display module (120) in communication with the electronic device (110), comprising,
an interface for receiving a message (190); and
a memory comprising at least one application enabled for:
causing said message (190) to be displayed in a message list (210) displayed at the GUI (195);
initiating at least one active download of at least one attachment associated with said message (190);
determining that said message (190), in said message list (210) displayed at the GUI (195), is selected;
determining if said message (190) is associated with said at least one active download; and
if said message (190) is associated with said at least one active download, causing said display module (120) to display information (240) associated with progress of said at least one active download in an area of the GUI (195) which is proximal to said message (190).
a processing unit enabled for processing said at least one application.

**13.** The electronic device (110) of claim 12, further comprising the display module (120) and an input device (125) for receiving an input for selecting said message (190).

**14.** The electronic device (110) of claim 13, wherein said electronic device (110) comprises a handheld electronic device (199).

**15.** The electronic device (110) of claim 12, wherein said determining that said message (190), in said message list (210) displayed at the GUI (195), is selected comprises at least one of determining that a cursor is hovering over a message field associated with said message (190), receiving input from said input device (125) indicative that said cursor has been used to click on a message field associated with said message (190), and determining that a message field associated with said message (190) has been highlighted.

**16.** The electronic device (110) of claim 12, wherein said at least one application comprises at least one of a messaging application, a tooltip polling thread, a field manager and a download manager (176).

**17.** The electronic device (110) of claim 12, wherein said causing the display module (120) to display information (240) associated with progress of said at least one active download in an area of the GUI (195) which is proximal to said message (190) comprises causing the display module (120) to display a tooltip comprising said information (240).

**18.** The electronic device (110) of claim 17, said at least one application is further enabled for updating said information (240) associated with progress of said at least one active download by updating said tooltip.

**19.** The electronic device (110) of claim 17, wherein said at least one application is further enabled for causing the display module (120) to display an active download icon (230c) proximal to said message (190), while said at least one active download is occurring.

**20.** The electronic device (110) of claim 12, wherein said at least one application is further enabled for determining that a previously selected message (190), in a message list (210) displayed at the GUI (195), is no longer selected; and if the display module (120) is displaying information (240) associated with progress of said at least one active download associated with said previously selected message (190), causing the display module (120) to cease displaying said information (240).
